# EUROPEAN PATENT APPLICATION

(11) **EP 2 110 217 A1**
(43) Date of publication of application: **21.10.2009**
(21) Application number: 09157749.4
(22) Date of filing: 09.04.2009
(51) Int. Cl.: B29B 7/88

(54) **Apparatus, method and product for providing an additive for a plastic main flow**

(30) Priority: 14.04.2008 NL 1035294
(71) Applicant: Recomexx Industries B.V., 4611 LD Bergen op Zoom (NL)
(72) Inventor: van den Berg, Jacobus Johannes, 4611 LD, Bergen op Zoom (NL)
(74) Representative: Grootscholten, Johannes A.M.

(57) **Abstract**

The invention relates to a method for providing an additive for or to a plastic flow (4), for instance a flow of thermoplastic material, said additive comprising at least one raw material from the group at least comprising: dye; anti-oxidants and stabilizers. This method comprises of: buffering (7,8,9) the additive; dosing the additive; and introducing dosed quantities of additive into the plastic flow. This method consists of mixing the raw materials and forming grains or pellets (22) from the mixture under pressure, and buffering the grains or pellets.

## Description

The present invention relates to a method and apparatus for providing an additive for a plastic flow, and also a product or intermediate product serving as additive. Such a method, apparatus and product are generally known.

It is known here for raw materials in the form of dust or powder to be combined in order to form the additive. These can be premixed prior to being optionally placed in a buffer. From the buffer it is possible to dose the preferably homogeneously mixed mixture of raw materials which must together form the additive. Such known art has the drawback however that segregation may occur. Segregation means the separation of the components of a mixture. Segregation can for instance occur under the influence of vibrations such as occur in a system in which the method or the apparatus according to the present invention is applied, for instance as feed to an extruder.

Similar considerations and drawbacks have relevance when grains, for instance fine or very fine grains, of individual raw materials are applied. While the mixture is then not a mixture of different types of dust but of different types of grain, such a segregation can nevertheless still occur, particularly in the case of different dimensions of different types of grain. It has been proposed in the prior art to use other solutions to this problem.

It has thus been proposed in the past that a carrier for the different raw materials can be provided so as to form the additive. Such a carrier can then consist for instance of the same thermoplastic material from which the plastic main flow is formed for the purpose of properly receiving the additive therein. For this purpose a limited quantity of such a thermoplastic plastic is melted in order to add the additives thereto in a mixed form. The thermoplastic plastic is then allowed to cure and then broken into pieces. Many additives already react with the carrier in this preliminary process and lose their activity even before they are to be usefully employed, for instance during extrusion of a basic flow. The raw materials are then no longer active during the extrusion because they have lost their effectiveness in the process of forming the pieces of thermoplastic material. Such additives are then thus not suitable for use in a carrier for forming the pieces and must be added separately to the extruder.

The present invention provides, in different ways and in different categories, a solution to both problems such as they predominantly occur in the prior art. By tabletting or pelletizing dry raw materials which must together produce the desired mixture for an additive, cohesion can be imparted to the mixture without having to use a carrier for this purpose. Tabletting or pelletizing can take place under pressure, and the pressure does not have to be raised higher than is necessary to hold the raw materials together up to the moment of use in the plastic main flow. A slight cohesion can already suffice for this purpose, provided it can withstand crumbling of the pellets or grains, since this could in turn result in segregation.

It is an advantage here that a high degree of homogeneity can be realized, and the colour stability improved, since only slight variations in the composition of the raw materials need occur. It is also possible to keep the machines, such as an extruder, cleaner because raw materials in the form of powders and dust are pressed into tablets and/or pellets.

The grains or pellets are preferably used for dosing for the purpose of feed thereof to the plastic main flow. The dosing of grains or pellets is per se easier one by one than dosing raw materials in the form of dust or even liquid raw materials.

Is further noted that the pelletizing or otherwise forming of the raw materials for the additive into grains can take place *in situ,* or at least in the close vicinity thereof.

The drawback that a specific additive must be formed for each raw material composition and a separate supply thereof must be built up, can thus be obviated in simple manner. In the known art switching between specific embodiments of additives is after all almost always associated with providing to the plastic main flow a pre-prepared additive, in which the mixed mixture of raw materials is then incorporated. A simple variation of a feed flow of additive is then thus not possible once the flow has been set into motion. The feed of a determined additive must therefore be ended in order to then select a different additive from the supply and connect this to the further process, for instance in the main flow to an extruder. Particularly when pellets or tablets are produced in the vicinity of a further processing installation such as an extruder, according to an aspect of the invention such a positioning of an apparatus for the purpose of forming grains or pellets can however provide advantages. The production process which can be realized with such an apparatus can be instantly modified to requirements, such as a change in the composition of the additive. As already noted above, for this purpose the production process with a master batch must be halted in the known art in order to take from the supply a batch with a desired composition of the additive. This can therefore be prevented by producing *in situ* and subsequently dosing the produced grains or pellets, wherein this process of producing the grains or the pellets can be easily modified to the requirements at any moment.

Such an apparatus, which can optionally be placed *in situ,* can comprise feed means for the raw material or raw materials. These are then mixed if necessary. In addition, dosing means can be provided for separating or selecting predetermined quantities of mixed raw materials, and these measured quantities can be supplied to pressing means for pelletizing the mixed raw materials into grains or pellets. The formed pellets or grains can then be transferred to a further processing installation or a further dosing apparatus in order to be added to the plastic main flow. A further processing station can for instance be formed by an extruder.

As already noted above, the present invention also relates to the product per se, which can be applied as additive for a plastic flow, wherein the product takes the form of a grain or pellet and comprises a desired composition of at least one selected raw material.

The invention will be further elucidated hereinbelow on the basis of two figures, which are illustrative of, though not limitative for, aspects and considerations according to the present invention, and wherein similar or identical parts and components, considerations and aspects are designated with the same reference numerals, and in which:
Fig. 1 shows a highly schematic view of an installation according to the present invention in its entirety, which debouches in an extruder;
Fig. 2 shows an equally schematic view of a method in which pellets or grains of additive can be formed according to the present invention.

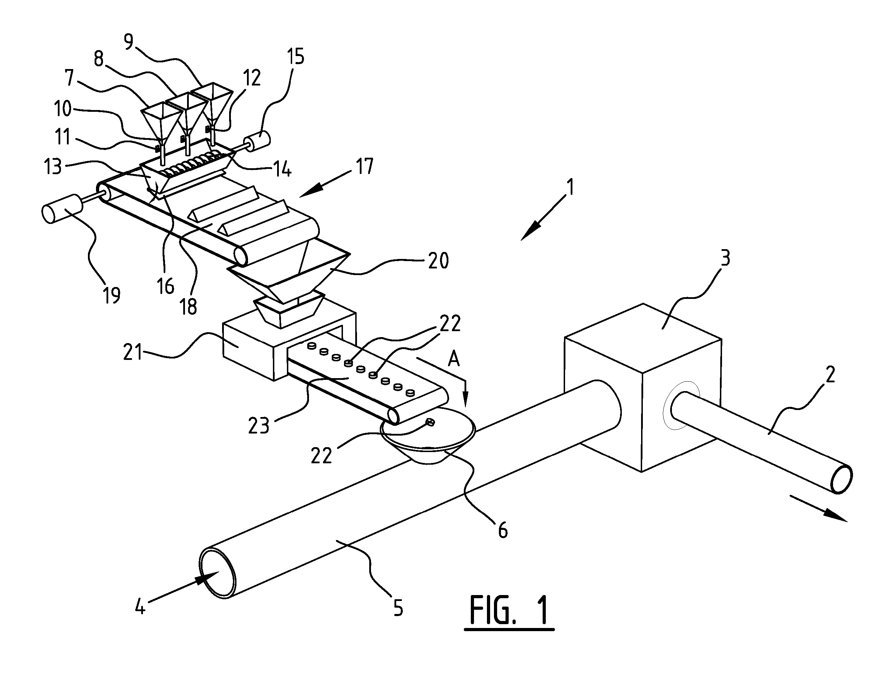

Fig. 1 shows a production process which is based on an installation 1 for forming a tubular extrusion product 2, such as a plastic pipe 2. Used for this purpose is an extruder 3 which is fed with a plastic main flow 4 via a supply 5. Provided in the supply is a position for introducing into the plastic main flow 4 an additive which can consist of various raw materials. Use was previously made of the introduction at feed 6 of master batches or powdered mixtures of the raw materials.

Three containers 7, 8 and 9 are shown on the left in fig. 1. Container 7 contains anti-oxidants. Container 8 contains stabilizers, while container 9 contains pigments. Each of the containers 7, 8 and 9 is funnel-shaped and runs to an outlet 10 in which a tap 11, 12 is arranged as an embodiment of a first dosing mechanism. Using taps 11, 12 (two are given reference numerals although three are arranged at each of the containers 7, 8 and 9), the ratio in the desired mixture for the additive can be realized. This is realized in that flows of raw materials run from containers 7, 8 and 9 to a container 13, in which is arranged a screw 14 driven by a motor 15. Screw 14 can be set into operation with motor 15 in order to obtain a homogenous mixture of the raw materials for the additive. At a given moment, with motor 15 in operation, the decision is or can be made that the mixture of raw materials in container 13 has been sufficiently homogenized. A valve 16 can here be operated, for instance using a control (not shown), for the purpose of depositing a quantity of additive 17 onto a conveyor belt 18, which conveyor belt 18 is or can be set into motion with appropriate or desirable driving using an electric motor 19. With the drive of motor 19 in operation conveyor belt 18 runs to the left in order to provide quantities of additive 17 ejected from container 13 to a tabletting machine 21 via a chute 20. Tabletting machine 21 can also be known as a pelletizing machine. With the thus supplied feed of homogenized mixtures of raw material for forming an additive 17, it is safe to assume that each of the pellets or grains 22 comprises the desired ratio of the different raw materials. The pellets or grains 22 leave the tabletting-pelletizing machine 21 on a conveyor belt 23 and are carried to inlet 6 in the direction of arrow A.

When the pellets or grains 22 fall into inlet 6 they enter the plastic main flow 4 which is being transported through supply 5 to extruder 3. When grains 22 enter the plastic main flow, which flows because it has been heated to above its melting point, pellets or grains 22 also fall apart and, by means of the pigment in the additives, bring about a homogenous colouring of the extruded pipe.

If the production process of installation 1 as shown in fig. 1 must be modified at a given moment, for instance when the colour of pipe 2 must be modified, control of taps 11, 12 can be adjusted. A pigment other than that in container 9 can here be poured into container 13, or the concentration of the pigment from container 9 in additive 17 can be varied. There is of course some processing time, this corresponding to the transport from containers 7, 8 and 9 to inlet 6. On the other hand a substantially instant switch of the system to a different colour is possible without having to bring in a whole new master batch, for instance from a supply of different master batches with individual raw materials or different compositions of the raw materials.

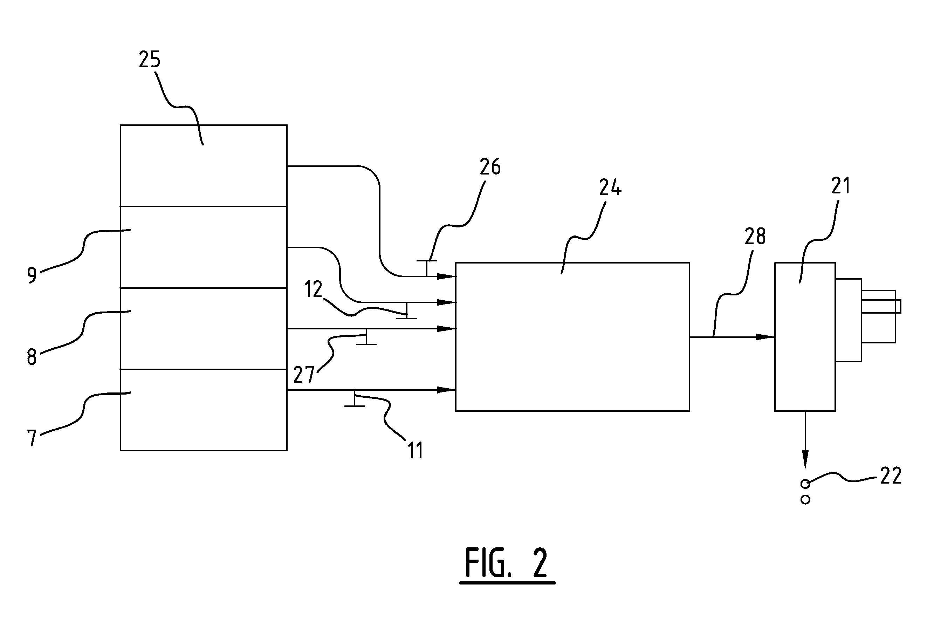

Fig. 2 shows substantially even more schematically than fig. 1 the manner in which the process for producing pellets or grains 22 takes place.

The configuration in fig. 2 further differs from that in fig. 1 in the addition of an extra container 25 with a pigment or dye other than that in container 9. A new colour can thus be employed quite quickly in the production process for extruding pipes 2.

Taps 11, 12, 26 and 27 are arranged in the connections between containers 7, 8, 9 and 25 and a mixing device 24. Using the taps a desired ratio of the raw materials can be set in each of the containers 7, 8, 9 and 25 as they enter mixing device 24. The mixing device is comparable to container 13 with mixing screw 14 therein. Another embodiment of a mixer can however also be applied. Mixer 24 supplies additive with the raw materials in desired ratios via a connection 28 to the tabletting or pelletizing apparatus 21. This apparatus makes the additive into pellets or grains 22.

After examination of the foregoing many alternative and additional embodiments will occur to a skilled person, all of which must be deemed as lying within the scope of the present invention as defined in the appended claims, unless such additional or alternative embodiments depart from the letter or spirit of these definitions. It is thus possible for end user machines to be applied which differ completely from extruder 3, and containers 7, 8, 9 and 25 can be replaced by supply lines. It is also possible for the additives to consist of raw materials which are carried in fluid flows to the tabletting machine, which can press the fluids out of these flows. No binding carrier is in any case applied, at least not in the above described and shown embodiments. It is thus further possible for the raw materials to be tabletted or pelletized at a greater distance than in the immediate vicinity or at least close to the extruder. The term 'raw materials' can moreover also be understood to mean a filler, which is added to a mixture when the at least two raw materials are mixed but which has no function per se in a later step, for instance extrusion, for manufacturing a final product. The stated raw materials of stabilizers, anti-oxidants and dyes and pigments clearly do fulfill such a function in the final production.

## Claims

1. Method for providing an additive for or to a plastic flow, for instance a flow of thermoplastic material, said additive comprising at least one raw material from the group at least comprising: dye; anti-oxidants; stabilizers, and said method comprising of :
- buffering the additive;
- dosing the additive; and
- introducing dosed quantities of additive into the plastic flow,
**characterized by** mixing the raw materials and forming grains or pellets from the mixture under pressure, and buffering the grains or pellets.

2. Method for producing an additive for a plastic flow, for instance a flow of thermoplastic material, said additive comprising at least one raw material from the group at least comprising: dye; anti-oxidants; stabilizers, said method comprising of:
- dosing at least two raw materials for the additive;
- mixing the raw materials; and
- forming grains or pellets from the mixture of raw materials under pressure.

3. Method as claimed in claim 1 or 2, further comprising of extruding the plastic flow with dosed quantities of grains or pellets added thereto.

4. Method as claimed in claim 1, 2 or 3, further comprising of: forming the grains and/or pellets *in situ* or at least close to and/or at the position of a processing device such as an extruder.

5. Method for providing an additive of at least one raw material from the group at least comprising: dye; anti-oxidants; stabilizers, for adding to a plastic flow, comprising of mixing the raw materials and forming grains or pellets from the mixture under pressure, and buffering the grains or pellets for use in or with the plastic flow.

6. Apparatus for manufacturing an additive from at least two raw materials from the group at least comprising: dye; anti-oxidants; and stabilizers,
said apparatus comprising:
- feed means for the raw materials;
- mixing means for mixing the raw materials; and
- dosing means for separating predetermined quantities of mixed raw materials; and
- pressing means for pelletizing to grains or pellets the separated, predetermined quantities of mixed raw materials.

7. Apparatus as claimed in claim 6, further comprising a discharge for delivering grains or pellets which can be connected to one of an inlet of an extruder and a passage for throughfeed of a plastic flow.

8. Product as additive for a plastic flow, comprising at least one raw material from the group at least comprising: dye; anti-oxidants; stabilizers,
**characterized in that**
the raw materials are formed into grains or pellets under pressure without thermoplastic carrier.
